# EUROPEAN PATENT APPLICATION

(11) **EP 4 342 844 A1**
(43) Date of publication of application: **27.03.2024**
(21) Application number: 22197409.0
(22) Date of filing: 23.09.2022
(51) Int. Cl.: C01B 3/08

(54) **HYDROGEN PRODUCTION PROCESS**

(30) Priority: 22.09.2022 GB 202213860
(71) Applicant: Net Zero Scientific Ltd, Romford RM2 5QR (GB)
(72) Inventor: SMITH, Alan Michael, Romford, RM2 5QR (GB)
(74) Representative: Mewburn Ellis LLP

(57) **Abstract**

A process for generating hydrogen from waste metal is described. The process involves passing particulate waste metal, water and a catalyst into a reaction chamber, reacting the metal with water to generate hydrogen and metal hydroxide products, and separating the hydroxide product. During the reaction the temperature of the reaction mixture within the reaction chamber is maintained within the range 70 to below 100 °C, and the pressure is maintained within the range 100 kPa to 200 kPa. The process is useful for the generation of hydrogen and metal hydroxide from waste metal feedstock.

## Description

### Field of the Invention

The present invention relates to a process for generating hydrogen and metal hydroxides from waste metal.

### Background of the Invention

Meeting hydrogen gas production targets for the economy in an ecologically sound and sustainable way requires improvements in system efficiency and reduction of plant capital cost and energy consumption. In value terms the hydrogen market in 2014 was estimated to be worth £65-75 Bn.

Asia and Oceania are the largest producers with 39% of global production in 2010. The region generated around 21 million metric tons of hydrogen in 2010, around twice the USA production figure. Hydrogen can be produced at a central location or on-site. On-site generation reduces problems associated with transportation and delivery, so this sector is growing significantly. This option has also become more economic since new on-site hydrogen generation technologies can offer lower costs compared to hydrogen deliveries by pipeline, cylinders or tanker. Because hydrogen is difficult to store and distribute, and because gaseous hydrogen has a low volumetric energy density compared to liquid fuels, hydrogen is most conveniently and economically produced at a point near the place of use, rather than in a remote refinery to be distributed like gasoline. To be effective, hydrogen generation plants for fuel cells (as one example) must be smaller, simpler, and less costly than the current generation of industrial hydrogen plants. Furthermore, because of the difficulties of long-term hydrogen storage, gas generators need to be able to provide a varying amount of gas as demand varies. Currently 48% of the world's hydrogen is derived from natural gas, 30% from oil, and 18% from coal. Electrolysis of water accounts for only a small fraction of this total.

Traditional hydrogen production processes are without exception energy-intensive and are a source of carbon dioxide emissions and pollution. For example, the majority of bulk hydrogen is produced using a process called 'steam reforming'. This normally uses fossil fuels like natural gas, oil, or coal as raw material. The energy content of the hydrogen produced is less than the energy content of the original fuel, some of it being lost as excessive heat during production. Steam reforming also gives rise to significant carbon dioxide emissions.

A small but increasing amount of hydrogen is produced by electrolysis in single or plural cells or tanks which may involve the use of proton exchange membranes (PEMs) and a wide variety of current-conducting materials as electrodes.

The huge and ever-growing energy market, the political imperative of energy security and the rising price of fossil fuels have stimulated great interest in cheaper means of hydrogen production, but so far no major breakthrough has been made.

Hydrogen is most conveniently and economically produced at a point near the place of use, rather than in a remote refinery and distributed like gasoline. To be effective, hydrogen generation plants for fuel cells (as one example) must be smaller, simpler, and less costly than the current generation of industrial hydrogen plants. Furthermore, because of the difficulties of long-term hydrogen storage gas generators need to be able to provide a varying amount of gas as demand varies.

There is therefore a need for industrially scalable methods of producing hydrogen which are cost-, energy- and material-efficient, environmentally friendly and able to meet intermittent demand with rapid start-up and shut-down.

The reaction of metals such as aluminium with water to generate hydrogen is known. However known processes tend to require expensive processing or purification of feedstock or reaction products/by-products, making them inefficient and unable to be used for economical hydrogen production. The products and by-products produced from such processes are often contaminated, necessitating purification and/or disposal of these. There is a need for more energy-efficient variants of this process.

The invention we present here provides a low energy and zero-emission hydrogen production method and reactor system without any of the cost and pollution penalties inherent in current technologies.

### Summary of the Invention

The invention relates generally to a process for generating hydrogen from waste (scrap) metal, and in particular to processes which employ a specific temperature and pressure window.

A first aspect of the invention is a process for generating hydrogen from waste metal, comprising:
passing particulate waste metal, water and a catalyst into a reaction chamber;
reacting the metal with water to generate hydrogen and metal hydroxide products; and
separating the hydroxide product;
wherein during the reaction the temperature of the reaction mixture within the reaction chamber is maintained within the range 70 to below 100 °C, and the pressure is maintained within the range 100 kPa to 200 kPa.

The process allows the conversion of waste metal into commercially and industrially useful products, including hydrogen and metal hydroxides. Unlike steam reforming, the process does not generate greenhouse gas emissions such as CO₂, and is energy efficient. The process is able to make use of waste metal which would have otherwise been unsuitable for recycling or reuse, for example contaminated industrial waste or consumer waste.

It has been found that a temperature range of from 70 to below 100 °C and a pressure range of 100 kPa to 200 kPa provides a beneficial kinetic window for the process. The presence of oxides on the surface of the metal hinders its reaction with water, slowing the rate of reaction. Without wishing to be bound by theory it is believed that this combination of temperature and pressure reduces oxide formation on the waste metal surface while ensuring a good rate of reaction, with temperatures or pressures outside these ranges risking an unacceptably slow reaction, or causing the formation of a tough oxide layer on the metal surface, inhibiting the conversion to hydroxide.

A second aspect of the invention is a process for generating hydrogen from waste metal, comprising:
passing particulate waste metal, water and a catalyst into a reaction chamber;
reacting the metal with water to generate hydrogen and metal hydroxide products; and
separating and purifying the hydroxide product;
wherein some or all of the hydrogen generated by the hydrogen generation reaction is used for one or more of:
(a) the generation of electricity through hydrolysis;
(b) combustion;
(c) the powering of hydrogen fuel cells; and
(d) chemical feedstock.

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise.

### Waste metal

The term "waste metal" as used herein denotes metal which is a by-product of a commercial or industrial process, or metal which is a waste product from consumer use. The term "waste metal" may refer to metal which would otherwise have been smelted, recycled, or disposed of by landfill or another disposal method.

In some embodiments, the waste metal comprises or consists of one or more of aluminium, magnesium, zinc, titanium, iron, molybdenum, calcium, strontium, barium, sodium, potassium, lithium and silicon.

In some embodiments, the waste metal comprises or consists of one or more of aluminium, magnesium, zinc, titanium, iron, and molybdenum. In some embodiments, the waste metal comprises or consists of one or more of aluminium and magnesium.

In some embodiments, the waste metal comprises or consists of aluminium. In some embodiments, the waste metal comprises predominantly aluminium, for example at least 50 wt% of the waste metal may be aluminium, or at least 60 wt%, at least 70 wt%, at least 80 wt% or at least 90 wt%. Due to the nature of waste streams, the waste metal may also contain some impurities such as other metals, plastics and grease/oils.

The world's supply of aluminium trihydrate and aluminium oxides is mostly produced from strip-mined bauxite clay, often extracted in eco-sensitive areas of the tropics. The energy required for further refining bauxite by the widely-used Bayer Process depends on the quality of the raw clay, some bauxites requiring higher temperature processing which demand a higher energy input. Investments in technology upgrades at many existing facilities have improved energy efficiency by around 10% over the last decade with no change in input material, but energy consumption, CO₂ emissions and production of 'red mud' mine waste are still huge problems for a world moving towards a zero-CO₂ economy. Today, the average overall energy consumed to make aluminates in terms of fuel and chemicals is around 4.2 MWh per tonne of alumina, including electrical energy of around 150 kWh/t for α-Al₂O₃.

The use of waste aluminium as feedstock in the process allows for the production of useful aluminium hydroxide (also known as alumina trihydrate) product alongside hydrogen, offering an alternative to the costly and energy-intensive Bayer Process. The aluminium hydroxide may also then be further processed to produce alumina. Aluminium hydroxide and alumina are valuable products in their own right.

In some embodiments, the waste metal comprises one or more of turnings, drill chips, shredded containers, wire, incinerator bottom ash (IBA), baghouse dust and waste foil.

In some embodiments, the waste metal comprises engineering waste, for example one or more of turnings and drill chips.

In some embodiments, the particulate waste metal has an average particle size of less than about 3 mm, for example less than about 2.5 mm, less than about 2 mm, less than about 1.5 mm, less than about 1 mm, less than about 0.5 mm, less than about 100 µm, less than about 50 µm, less than about 20 µm, or less than about 10 µm. In some embodiments, the particulate waste metal has an average particle size of at least about 1 µm, for example at least about 2 µm or at least about 3 µm. In some embodiments, the particulate waste metal has an average particle size of from about 1 to about 20 µm, for example from about 1 to about 15 µm, from about 1 to about 10 µm, from about 1 to about 8 µm, from about 2 to about 8 µm, or about 5 µm.

Particles of waste metal are often irregular in shape and very rarely spherical. Herein, "average particle size" is the weight-average (median) particle size determined by passing a population or particles through a series of calibrated mesh sieves using method ASTM D1921-18.

The particulate waste metal may have the above average particle size as a result of the method of its generation, for example due to its formation as turnings or drill chips. Alternatively, larger particles may be processed to reduce the particle size to provide an average particle size within the above ranges.

In some embodiments, the waste metal comprises contaminated metal which is unsuitable for smelting. In this way, waste material which is otherwise difficult to recycle or reuse can be used by the process.

In some embodiments, before feeding to the reaction chamber the particulate waste metal is subjected to one or more of washing, degreasing, shredding to reduce the particle size, and a separation process to remove one or more impurities. The waste metal is preferably treated to remove oil/grease deposits because these can cause problems in the reactor such as foaming, and lead to greater levels of contaminants in the hydroxide/oxide products.

In some embodiments, before feeding to the reaction chamber the particulate waste metal is washed in water. The water may comprise a degreasing agent to help dislodge, dissolve or remove grease from the surface of the waste metal.

In some embodiments, before feeding to the reaction chamber the particulate waste metal is subjected to an electromagnetic separation process to remove any ferromagnetic impurities. This may improve the purity of the hydroxide or oxide product.

In some embodiments, before feeding to the reaction chamber the particulate waste metal is shredded to reduce the average particle size to within the range of from about 1 to about 20 µm, for example from about 1 to about 15 µm, from about 1 to about 10 µm, from about 1 to about 8 µm, from about 2 to about 8 µm, or about 5 µm.

Ensuring a particle size within these ranges improves the reaction kinetics, making the process more efficient, and provides suitably-sized aluminium hydroxide product particles.

The waste metal in particulate form may be added to a solvent to provide a slurry before feeding the slurry to the reaction chamber. The solvent may comprise or consist of water, such that a slurry of waste metal particles in water is formed. The slurry may lack any catalyst. The slurry may consist of water and waste metal particles. The slurry may be fed to the reaction chamber via a suitable reactor inlet. In some embodiments this slurry is passed into the reaction chamber using a lockhopper.

### Catalyst

Suitable catalysts for the process include alkali metal hydroxides, for example one or more of LiOH, NaOH and KOH. In some embodiments, the catalyst consists of an alkali metal hydroxide catalyst. In some embodiments, the catalyst consists of a single type of alkali metal hydroxide.

In some embodiments, the hydrogen production process employs a catalyst comprising or consisting of KOH to catalyse the conversion of waste metal into hydrogen and hydroxide.

KOH is a very effective catalyst for this process, acting as a powerful solvent to dissolve any oxide layer from the surface of the waste metal particles, allowing the waste metal to react with the water. Moreover, alumina made by alternative processes, such as the Bayer Process discussed above, is often contaminated with contaminants such as sodium, which is avoided by using the KOH catalyst.

The catalyst may be dissolved or suspended in a solvent, such as water, before feeding to the reaction chamber. In some embodiments, the catalyst is dissolved in water. For example, when KOH catalyst is used, the KOH in particulate form in a desired quantity may be dissolved in water, before injecting that aqueous KOH solution into the reaction chamber in order to initiate the reaction between the waste metal and water already in the reaction chamber. The water may be degassed before the addition of the catalyst.

In some embodiments, the catalyst is prepared by a method which comprises a recrystallisation step to increase the purity of the catalyst to greater than 90 wt%, for example greater than 95 wt%.

In some embodiments, the recrystallisation step comprises dissolving the catalyst in a mixture of water and an alcohol.

In some embodiments, the recrystallisation step comprises preparing a saturated solution of catalyst (e.g. KOH) in a solvent comprising water and an alcohol at elevated temperature, and cooling to crystallise the catalyst, optionally with the addition of seed crystals to the solution. In this way, more soluble contaminants such as sodium carbonate remain in solution. The alcohol may comprise or consist of one or more of methanol, ethanol and propanol.

This recrystallisation allows the conversion of commercially available KOH, which is only around 87-90% pure and often contaminated with contaminants such as carbonates, into a purer form of KOH having very high catalytic activity for the hydrogen production reaction.

In some embodiments, the concentration of catalyst in the reactor is maintained at 0.2 moles per litre or lower throughout the reaction, for example up to 0.19 mol L⁻¹, up to 0.18 mol L⁻¹, up to 0.17 mol L⁻¹, up to 0.16 mol L⁻¹, up to 0.15 mol L⁻¹, up to 0.14 mol L⁻¹, up to 0.13 mol L⁻¹, up to 0.12 mol L⁻¹, up to 0.11 mol L⁻¹, or up to 0.10 mol L⁻¹. In some embodiments, the concentration of catalyst in the reactor is maintained at about 0.10 mol L⁻¹ throughout the reaction. It has been found that a catalyst concentration outside this range favours the early conversion of catalyst to an aluminate by-product, reducing the level of active catalyst in the reaction mixture and slowing the rate of reaction, in some cases to such an extent that it would not be commercially viable. For example, when the catalyst is KOH, the catalyst is consumed to form potassium aluminate at an unacceptably high rate when initial concentration of catalyst is greater than 0.2 mol L⁻¹. Surprisingly, this reaction which consumes the catalyst does not occur to any significant extent when the above concentrations are adhered to.

### Water

Water is a reactant in the process, oxidising the waste metal and acting as the hydrogen donor. In some embodiments the reaction solution within the reaction chamber is a solution or suspension, wherein the solvent in the solution or suspension comprises or consists of water.

The process comprises passing particulate waste metal, water and the catalyst into the reaction chamber. In some embodiments, a slurry is prepared comprising the waste metal and water and this slurry is passed into the reaction chamber as described above. In some embodiments this slurry is passed into the reaction chamber using a lockhopper.

In some embodiments, after injection of the metal/water slurry into the reaction chamber, a desired further quantity of water is added to the reaction chamber to provide a desired volume of reaction solution (allowing for a further small quantity of catalyst-containing water to be subsequently added to initiate the reaction).

In some embodiments, the process comprises:
(i) preparing a slurry of waste metal in water and passing the slurry into the reaction chamber;
(ii) passing a desired further quantity of water is added to the reaction chamber to provide a desired volume of reaction solution within the reaction chamber; and
(iii) passing a catalyst-containing solution or suspension into the reaction chamber to initiate the reaction.

In some embodiments, the water contained within the slurry of waste metal is heated up to the desired reaction temperature before addition to the reactor (either before or after addition of the waste metal to the water), herein referred to as "preheating". In some embodiments, this is a temperature within the range 70 to below 100 °C, for example about 80 °C. In some embodiments, preheating may be achieved by bubbling hot gas through the water or slurry, for example hot hydrogen gas from an earlier reaction run.

In some embodiments, after the addition of the further quantity of water to the reaction chamber and before the addition of any catalyst (i.e. between steps (ii) and (iii)), and as an alternative or in addition to preheating, the reaction solution within the reaction chamber is heated up to the desired reaction temperature. In some embodiments, this is a temperature within the range 70 to below 100 °C, for example about 80 °C. This may be achieved using a heat exchanger, electrical heating element, or other suitable heating element, located either internally or externally. Alternatively or additionally, heating may be achieved by bubbling hot gas through the reaction solution, for example hot hydrogen gas from an earlier reaction run. In some embodiments an internal heating element is used. During this process air may be allowed to escape the reactor. In some embodiments a pump, for example a vacuum pump, is used to actively remove air from the reactor, making the start-up procedure more efficient. Removal of air in this way before the reaction begins reduces the risk of explosion which could result from allowing hydrogen and air to mix.

In some embodiments, the mixture in the reaction chamber is agitated as it is heated to the temperature within the range 70 to below 100 °C, for example using an internal agitator, such as a rotary stirrer, and/or ultrasonic agitation. The mixture may be continuously agitated during heating to ensure homogeneous heating of the mixture and eliminate hotspots in the vicinity of the heating element.

In some embodiments, after the addition of the metal-containing slurry and the further quantity of water to the reaction chamber, and after the heating and any air-removal steps, the catalyst-containing solution or suspension is added to initiate the reaction (step (iii)). In some embodiments, the water in the catalyst solution/suspension is degassed before addition to the reaction chamber, for example by heating. In some embodiments, the catalyst-containing solution or suspension is injected into the reaction chamber via a suitable valved inlet with a dosing and/or metering pump.

In some embodiments, before feeding to the reaction chamber, any water is subjected to one or more of deionisation, filtration and degassing. Untreated water may contain an excessive amount of dissolved minerals, have high acidity or alkalinity or contains suspended solid matter. The use of such untreated water may result in mineral scale or corrosion build-up on reactor parts, shortening lifetime of the reactor parts and/or necessitating periodic shutdown for cleaning. The hydrogen and/or hydroxide products could also become contaminated by the use of such contaminated water feedstock. Deionisation, filtration and/or degassing of the water ameliorates these problems.

Other than water, waste metal and catalyst, the reaction mixture may optionally comprise one or more anti-foaming agents. These may help reduce the formation of foam within the reaction chamber during the reaction, and prevent carryover of such foam with the hydrogen gas product. Such anti-foaming agents may be useful when the waste metal comprises residual oils or grease which, in the presence of the alkaline catalyst, would form a soapy substance leading to foam generation.

During the reaction, the temperature of the reaction mixture within the reaction chamber is maintained within the range 70 to below 100 °C, for example within the range 70 to 90 °C, 75 to 85 °C, 80 to 90 °C, for example about 80 °C. In some embodiments this is achieved using an automatic temperature control system. Since the metal oxidation process is exothermic, the process may comprise cooling the reaction mixture during the reaction to ensure that the temperature stays within this range. Cooling may be achieved by, for example, cold water injection, gas cooling or the use of a heat exchanger. The heat exchanger may be external to the reactor, for example a cold-water jacket. Alternatively or additionally, cooling may be provided by an internal coil (heat exchanger) with cold water circulating within it. The heat extracted by such a heat exchanger may then be used to pre-heat feed water up to the reaction temperature. The exothermicity of the hydrogen generation reaction should provide all the heat necessary to pre-heat the feed water in this way.

It has been found that a temperature of 85 to 95 °C is particularly preferable, for example about 90 °C. It was surprisingly found that a temperature above 95 °C begins to favour the production of a tough layer of oxide on the surface of the waste metal, inhibiting the conversion to hydroxide, while at temperatures below 85 °C the reaction rate is slower. Keeping the temperature within the above range limits the production of such an unwanted oxide later while ensuring a good rate of reaction.

In some embodiments, atmospheric pressure within the reaction chamber may be used during the reaction (i.e. about 100 kPa). Alternatively the reaction may be run at higher pressures, for example at a pressure up to 200 kPa, for example up to 195 kPa, up to 190 kPa, up to 185 kPa, up to 180 kPa, up to 175 kPa or up to 170 kPa. The reaction pressure is from 100 kPa to 200 kPa, for example from 100 kPa to 195 kPa, from 100 kPa to 190 kPa, from 100 kPa to 185 kPa or from 100 kPa to 180 kPa.

In some embodiments, the pressure is maintained at from 120 to 200 kPa, or from 150 to 200 kPa. In some embodiments, the pressure is maintained at about 150 kPa. It was surprisingly found that a pressure above 200 kPa begins to favour the production of a tough layer of oxide on the surface of the waste metal, inhibiting the conversion to hydroxide. Keeping the pressure within the above range limits the production of such an unwanted oxide later.

In some embodiments, during the reaction the temperature of the reaction mixture within the reaction chamber is maintained within the range 85 to 95 °C, for example at about 90 °C, and the pressure is maintained at 100 to 200 kPa, for example at about 150 kPa.

In some embodiments, during the reaction the temperature of the reaction mixture within the reaction chamber is maintained at less than 100 °C, for example less than 90 °C, and the pressure is maintained at from 120 kPa to 200 kPa, for example at about 150 kPa.

In some embodiments, the concentration of catalyst in the reactor is maintained at 0.2 mol L⁻¹ or lower, for example 0.1 mol L⁻¹, throughout the reaction, the temperature of the reaction mixture within the reaction chamber is maintained within the range 85 to 95 °C, for example at about 90 °C, and the pressure is maintained at 100 to 200 kPa, for example at about 150 kPa. These catalyst concentrations, pressures and temperatures work together to provide a favourable 'kinetics window' for the reaction. Without wishing to be bound by theory, it is believed that this combination of conditions reduces loss of catalyst, reduces oxide formation on the waste metal surface and provides a good rate of reaction.

Operating at higher pressures may be beneficial because it facilitates the filling of containers with pressurised hydrogen gas product, without the need for a separate compression step.

In some embodiments, during the reaction to generate hydrogen the temperature within the reaction chamber is maintained within the range 70 to below 100 °C, the pH of the reaction solution is maintained at pH 12 or lower, and the pressure within the reaction chamber is maintained within the range 100 kPa to 200 kPa.

In some embodiments, the cooling comprises removing heat from the reaction chamber using a heat exchanger and passing this heat on for use in a system external to the reactor. In some embodiments, some or all of the heat evolved from the hydrogen generation reaction is used to provide heat for one or more of:
(a) the drying and/or calcination of the metal hydroxide product;
(b) horticultural heating;
(c) delivery to a local heating scheme;
(d) the smelting of waste metal; and
(e) the pre-heating of water before feeding to the reaction chamber.

In some embodiments, the heat exchanger provides a heat removal of at least 0.5 MW, for example at least 0.6 MW or at least 0.7 MW. In some embodiments, the heat exchanger provides a heat removal of from 0.5 MW to 1 MW.

Calcination of the metal hydroxide to form an oxide may be desirable to generate a useful oxide product, for example alumina when the waste metal feedstock comprises aluminium. Calcination involves the heating of the hydroxide to very high temperatures within a crucible or "saggar", for example within a kiln, which is energy intensive. By using heat extracted from the hydrogen generation reaction, the energy input required to reach a temperature sufficient for calcination is reduced and the overall process for preparing the calcined oxide product is more energy efficient.

Horticultural heating may involve the transfer of heat from the reaction chamber to a greenhouse where it may be used to maintain ambient temperature sufficient for efficient plant growth. In this way the energy requirements of the horticultural or agricultural activities are reduced.

Delivery of the heat to a local heating scheme could be used to provide heat for residential or commercial properties in the locality of the plant containing the reactor. This will reduce the energy requirements of those properties.

Alternatively some or all of the heat evolved from the process could be used in the smelting of waste metal. In some embodiments, a waste metal feedstock stream is divided into a first stream for oxidation according to the process of the invention and a second stream for smelting. For example, the first stream may comprise a portion of the waste metal which is more highly contaminated (e.g. with surface oxides) and therefore less suitable for smelting. The heat evolved from the oxidation of the waste metal within the first stream may be used to heat the smelter into which the second stream is fed, thereby reducing the energy requirements of the smelter and reducing the overall energy consumption of the process.

It has been found that a particularly efficient process is provided when from about 20 to about 30 wt%, for example about 25 wt% of the waste metal stream is removed to provide the first stream for oxidation, with the remaining portion of waste metal being sent to a smelting furnace which is heated at least in part by the heat evolved from the hydrogen generation process and/or the combustion of hydrogen generated by the process (as discussed in more detail below). Diverting from about 20 to about 30 wt%, for example about 25 wt% of the waste metal in this way has been found to provide all of the fuel (in the form of hydrogen) required to power the smelting furnace in order to smelt the remaining waste metal stream.

Thus in some embodiments the particulate waste metal added to the reaction chamber is a first waste metal stream taken from an initial stream of waste metal, wherein the first waste metal stream comprises 20 to 30 wt% of the initial stream of waste metal, optionally about 25 wt%, and wherein the remaining portion of the initial stream of waste metal is a second waste metal stream;
wherein the second waste metal stream is fed to a smelting furnace, and wherein the hydrogen generated from the reaction of the first waste metal stream with water in the reaction chamber is combusted, and some or all of the heat generated by the combustion is used to power the smelting furnace for smelting the second waste metal stream.

Alternatively some or all of the heat evolved from the process could be used in the pre-heating of water before feeding the water to the reaction chamber. Water from a municipal supply may have an average temperature of 7-10 °C, so heat is required to bring the water up to the reaction temperature. Utilising the heat evolved from the exothermicity of the hydrogen generation reduces the environmental footprint of the process. For example, an internal or external heat exchanger may be used to extract the heat from the reaction and supply the heat to fresh feedwater in a preheater before feeding the water to the reactor.

The thermodynamics of the process are very favourable, much more so than steam reforming. Assuming a method which each week processes 20 tonnes of waste metal with a feedwater throughput of 24,000 kg, and average initial water temperature 10 °C, the energy required to heat the 24,000 kg of feedwater up to a 75 °C reaction temperature can be calculated to be 2.1 MWh. The total thermal output of the oxidation of aluminium is around 4 MWh per tonne, so 80 MWh from the 20 tonnes processed. The thermal output of the reaction is therefore more than sufficient to continuously pre-heat the feedwater, with 77.9 MWh remaining to be dissipated from the reactor after the pre-heating of feedwater is factored in (requiring 0.7 MW of heat dissipation). This remaining heat could be used elsewhere, for example for one or more of (a) to (d) mentioned above.

In some embodiments the process further comprising agitation of the reaction mixture during the hydrogen generation reaction. In some embodiments the agitation is continuous, i.e. uninterrupted during the course of the reaction. This ensures a consistent heat profile throughout the reaction mixture for a more consistent reaction and consistent product properties. Agitation may be achieved using a suitable internal stirrer, such as a rotary stirrer. In some embodiments agitation comprises ultrasonic agitation. In some embodiments both a physical stirrer and ultrasonic agitation are employed.

Agitation ensures maximum exposure of unreacted metal particles with the process water/catalyst solution. Without continuous agitation the hydroxide product may settle in drifts and the bottom of the reactor as the reaction proceeds, trapping unreacted metal particles within it and reducing the product yield.

In some embodiments the process further comprises monitoring one or more of:
hydrogen gas production rate;
hydrogen gas product quality;
catalyst concentration in the reaction mixture;
free space within the reaction chamber; and
reaction energy usage.

In some embodiments, conditions of the reaction may be adjusted either automatically or manually in response to the monitoring of these one or more parameters.

The reaction may be either a batch process or a continuous process. In a continuous process, feedstock water, catalyst and waste metal will be continuously introduced to the reaction chamber, and hydrogen gas and reaction mixture will be continuously removed, with hydroxide product in the reaction mixture being subsequently separated. Catalyst, water and any unreacted waste metal may be recycled back into the reaction chamber. In a batch process, feedstock water, catalyst and waste metal will be added to the reaction chamber at the start of the process, the reaction will then proceed without any further feedstock addition and then products will be removed when the reaction reaches a desired extent.

In some embodiments, the process comprises extracting some or all of the reaction mixture from the reaction chamber and subjecting the extract to one or more of:
separation to separate unreacted waste metal particles from hydroxide product particles; and
separation to remove process water and optionally feed the process water back into the reactor.

The separation to separate process water for reuse may involve one or more of filtration and cyclonic separation, to separate the water from unreacted waste metal particles and hydroxide particles. The process water may comprise dissolved catalyst which is thereby also recirculated to the reactor for reuse.

The separation to separate unreacted waste metal particles from hydroxide product particles may involve one or more of filtration, cyclonic separation and magnetic separation.

The separation to separate unreacted waste metal particles from hydroxide product particles may be a process which takes advantage of the higher density of the metal particles relative to the hydroxide product particles. For example, cyclonic separation or centrifugal separation may be used, or sedimentation whereby the metal particles settle faster than the hydroxide particles due to their higher density.

In some embodiments the unreacted waste metal particles are then fed back to the reaction chamber to undergo oxidation.

In some embodiments dissolved catalyst in process water is fed back to the reaction chamber to be used again in the process after separation.

The magnetic separation may be electromagnetic separation. This may be used to remove ferromagnetic materials from the product. Eddy current separation (also known as Coulomb separation) may be used to separate aluminium particles.

In some embodiments, process water is separated from the reaction mixture which is extracted from the reactor and is recycled back to the reaction chamber to be used again in the hydrogen generation reactor. The water may be treated before feeding back into the reaction chamber, for example by one or more of degassing, pre-heating, deionising and filtration.

After any unreacted waste metal, catalyst and process water has been removed and recycled, the residual slurry will contain predominantly hydroxide product particles in water. In some embodiments, this hydroxide slurry is then subjected to a further separation step, such as cyclonic separation, to recover any remaining process water (including dissolved catalyst) and unreacted waste metal particles to be fed back to the reactor. The resultant hydroxide slurry will be very concentrated.

In some embodiments, the hydroxide product slurry, whether or not the above further separation step is performed, is subjected to one or more of:
purification;
drying and/or calcining; and
packaging.

In some embodiments, the hydroxide product slurry is dried by spray-drying. Spray-drying requires less energy than thickening tanks and has high throughput.

The reaction chamber may be charged with fresh raw materials so that the reaction can continue after the removal of some of the reaction mixture.

A reactor in which the process of the invention may be performed comprises a reaction chamber of a desired volume and may have walls of any suitable material. For example, stainless steel walls lined internally with PTFE may be used for processes operating at low pressure (e.g. 100 to 200 kPa). The reactor may be equipped with both heating and cooling systems. The heating system may comprise an internal or external heating element or heat exchanger. The cooling system may comprise an internal or external heat exchanger and may comprise means to transfer heat removed from the reactor to an external system. The cooling system may comprise a heat exchanger, such as a water jacket. The reactor may further comprise temperature and pressure sensors. Valve-controlled inlet and outlet ports may be provided for the introduction of raw materials and the removal of products. The reactor may contain an internal agitator, for example an internal rotary stirrer for agitation of the reaction mixture during start-up and during the reaction.

The reactor may be connected with a process controller for monitoring process parameters such as temperature and pressure and controlling inputs such as heat delivery and removal, agitation, raw material delivery and product removal.

The reactor may comprise separate inlet ports for (a) water/catalyst mixture, (b) water/metal mixture, optionally (c) recycled unreacted waste metal, optionally (d) recycled water/catalyst mixture, and optionally (e) the injection of inert gas such as argon for purging air from the reactor. The reactor may comprise separate outlet ports for (a) purging of air and/or other gases from the reactor during start-up, (b) removal of hydrogen gas product, (c) removal of hydroxide-containing product slurry.

The reactor outlets may be fluidly connected with downstream processing units. The hydrogen gas product outlet may be connected with one or more of a dryer unit, a cooling unit and a purifying unit. The hydroxide product slurry outlet may be connected with one or more separation units for the removal of unreacted metal particles, dissolved catalyst and water from the hydroxide-containing slurry and their feeding back to the reactor. The one or more separation units may comprise filtration, cyclonic separation or magnetic separation.

In some embodiments, the reaction chamber comprises a heat exchanger.

In some embodiments, gas cooling is used to cool the reaction mixture within the reaction chamber during the reaction to generate hydrogen.

In some embodiments, the catalyst further comprises a co-catalyst. Ammonia is one example of a co-catalyst.

In some embodiments, the process further comprises one or more of drying and calcining the hydroxide product.

In some embodiments, the waste metal comprises or consists of aluminium and the hydroxide product comprises or consists of Al(OH)₃.

In some embodiments, the process further comprises calcination of the Al(OH)₃ to prepare Al₂O₃.

The calcination may be performed by roasting the Al(OH)₃ at a temperature of greater than 300 °C. The calcination temperature may be in the range 300 to 1500 °C, for example 300 to 1400 °C, 300 to 1300 °C, 300 to 1250 °C or 50 to 1250 °C. The calcination may be performed for at least 30 mins, for example at least 1 hour. In some embodiments, the Al(OH)₃ is held at a temperature of 1000 to 1250 °C for at least one hour, to ensure the transformation to α-alumina.

The hydrogen generated as a product of the oxidation of the waste metal is extracted from the reactor and may be subjected to one or more of cooling, drying, purifying and compression.

The hydrogen generated as a product of the oxidation tends to be initially very hot due to the exothermicity of the reaction. Due to the high heat capacity of hydrogen, this heat can be fed into other parts of the process to improve efficiency. For example, the heat from the hydrogen may be used to heat feed water up to a temperature at or close to the reaction temperature, before feeding to the reaction chamber. To achieve this the hot hydrogen may be bubbled through the cold water. This simultaneously provides cooling of the hydrogen, which is necessary before storage, and heating of the process water up to reaction temperature.

In some embodiments, some or all of the hydrogen generated by the hydrogen generation reaction is used for one or more of:
(a) the generation of electricity through hydrolysis;
(b) combustion;
(c) the powering of hydrogen fuel cells; and
(d) chemical feedstock.

Hydrogen produced by other processes such as the electrolysis of water or by steam reforming of hydrocarbons generally includes impurities such as oxygen, CO₂, CO, sulfides, mercaptans and sulfur oxides which must be removed prior to use of the hydrogen in fuel cells or in combustion (e.g. internal combustion engines or boilers). Failure to purify the hydrogen in this way may result in premature failure of the fuel cell, boiler or engine. The process of the invention produces highly pure hydrogen which does not require such expensive purification processes before use in fuel cells or combustion.

Another benefit of the invention is that the hydrogen product is humid at the point of manufacture, making it particularly useful in fuel cells which may require the hydrogen fuel to be humid to prevent the drying out of the membrane (e.g. PEM). As a result, the need for additional humidifying steps is removed.

In some embodiments, some or all of the hydrogen generated by the hydrogen generation reaction is used for the generation of electricity through hydrolysis, and some or all of the electricity is used to power a component of a reactor system comprising the reaction chamber. In this way, a process which is intended primarily for the production of hydroxide or oxide products can be made highly economical by powering the reactor using the by-product hydrogen.

In some embodiments, some or all of the hydrogen generated by the hydrogen generation reaction undergoes combustion to generate heat, and some or all of the heat so generated may be used for one or more of:
(a) the drying and/or calcination of the metal hydroxide product;
(b) horticultural heating;
(c) delivery to a local heating scheme; and
(d) the smelting of waste metal.

More details on the implementation and benefits of (a)-(d) are set out above in the context of using the heat generated from the exothermicity of the reaction. The same applies to heat which may be generated from the combustion of hydrogen.

In particular, use of the heat of combustion in the calcination of the metal hydroxide product helps reduce the energy consumption of the process for preparing an oxide product, such as alumina. In some embodiments, some or all of the heat required for the calcination of the hydroxide to form the oxide may be provided from one or both of the exothermicity of the hydrogen generation reaction and the combustion of the hydrogen evolved from the reaction. In this way, a process for the preparation of an oxide product, such as alumina (e.g. α-alumina) is provide which is much less energy intensive than known processes such as the Bayer Process, or processes where heat is provided from external sources which rely on e.g. the burning of fossil fuels.

In some embodiments, the process comprises the operation of several separate reactors either in series or parallel. In some embodiments, the process comprises the operation of several separate reactors in parallel. This allows for more tuneable control over the amount of hydrogen generated, according to demand. Where demand is low, the number of reactors in the parallel array in operation can be reduced. A separate benefit is that individual reactors within the array can be shut down for inspection or cleaning without interrupting the flow of product hydrogen which is supplied by the other reactors.

It has been found that typical start up time for the process from cold to full output is around 20 minutes, providing a fast response to fluctuations in hydrogen demand.

A second aspect of the invention is a process for generating hydrogen from waste metal, comprising:
passing particulate waste metal, water and a catalyst into a reaction chamber;
reacting the metal with water to generate hydrogen and metal hydroxide products; and
separating and purifying the hydroxide product;
wherein some or all of the hydrogen generated by the hydrogen generation reaction is used for one or more of:
(a) the generation of electricity through hydrolysis;
(b) combustion;
(c) the powering of hydrogen fuel cells; and
(d) chemical feedstock.

The benefits of using some or all of the hydrogen for such processes are described above in the context of the first aspect of the invention. In particular, a more economical process is provided in which the by-product hydrogen is put to good use.

In some embodiments of the second aspect, some or all of the hydrogen generated by the hydrogen generation reaction undergoes combustion to generate heat, and some or all of the heat so generated may be used for one or more of:
(a) the drying and/or calcination of the metal hydroxide product;
(b) horticultural heating;
(c) delivery to a local heating scheme; and
(d) the smelting of waste metal.

In some embodiments of the second aspect, the particulate waste metal added to the reaction chamber is a first waste metal stream taken from an initial stream of waste metal, wherein the first waste metal stream comprises 20 to 30 wt% of the initial stream of waste metal, optionally about 25 wt%, and wherein the remaining portion of the initial stream of waste metal is a second waste metal stream;
wherein the second waste metal stream is fed to a smelting furnace, and wherein the hydrogen generated from the reaction of the first waste metal stream with water in the reaction chamber is combusted, and some or all of the heat generated by the combustion is used to power the smelting furnace for smelting the second waste metal stream

All of the remaining options and preferences set out above in relation to the process of the first aspect apply equally to the second aspect.

### Brief Description of the Drawings

Figure 1 is a schematic representation of a reactor system for performing the process of the invention.
Figure 2 is a schematic representation of a second embodiment of a reactor system for performing the process of the invention.
Figure 3 is a graph of the extent of reaction for hydrogen production using Sample 1 as waste metal reactant (shredded used aluminium beverage cans).
Figure 4 shows an SEM image of aluminium hydroxide produced by the process of the invention.

### Detailed description

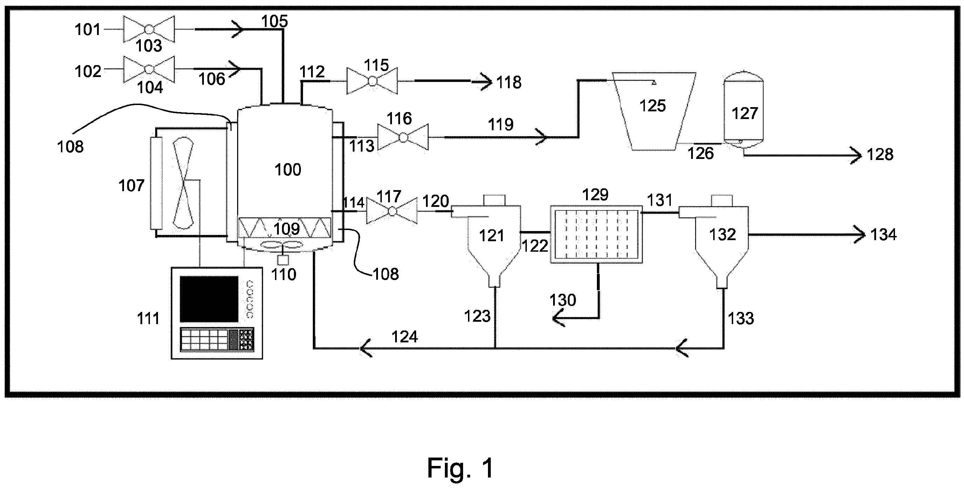

An example of a reactor system for carrying out the process is shown schematically in Figure 1.

A cylindrical reactor 100 contains a heating element 109 and a rotary agitator 110 and is jacketed with an external cold-water jacket (heat exchanger) 108.

The reactor 100 is fed by inlet line 105, with flow therethrough being controlled by valve 103. The reactor is also fed by inlet line 106, with flow therethrough being controlled by valve 104. The reactor also includes a first gas outlet 112, with flow therethrough being controlled by valve 115; a second gas outlet 113, with flow therethrough being controlled by valve 116; and a slurry outlet 114, with flow therethrough being controlled by valve 117.

The first gas outlet 112 and associated valve 115 are connected to an air purge line 118 through which air can be purged from the headspace within the reactor. The second gas outlet 113 and associated valve 116 are connected to hydrogen extraction line 119 which feeds into a gas cooling and drying unit 125. The gas cooling and drying unit 125 is connected via gas line 126 to a hydrogen purifier unit 127, which includes a purified hydrogen outlet line 128.

The slurry outlet 114 and associated valve 117 are connected to a first cyclonic separation unit 121 by cyclone inlet 120. The first cyclonic separation unit 121 includes a first outlet 122 in fluid communication with a downstream electromagnetic separator 129 and a second outlet 123 in fluid communication with a first recycling line 124. The electromagnetic separator 129 includes a first outlet 131 in fluid communication with a downstream second cyclonic separation unit 132 and a second outlet 130 in fluid communication with a second recycling line 130. The second cyclonic separation unit 132 includes a hydroxide product outlet 134 and a second outlet 133 in fluid communication with the first recycling line 124.

A process controller 111 is connected with the reactor system in order to monitor reaction parameters and control aspects of the reactor and reaction.

The reactor system shown in Figure 1 is configured to contain the hydrogen generation reaction of the invention. During use, firstly shredded and degassed aluminium feedstock, for example incinerator bottom ash or engineering waste, is immersed in water to form a slurry 101 and fed to the reactor 100 using a lockhopper (not shown) through inlet line 105. A further quantity of water, not containing any aluminium feedstock, is then injected into the reactor 100 again through inlet line 105 until a desired level of reaction mixture within the reactor is reached. The reaction mixture within the reactor 100 is then stirred using agitator 110 and heated up to a temperature in the range 75 to 85 °C using the immersion heater 109. The increased vapour pressure of the reaction mixture during hearing forces air to be purged out of the first gas outlet 112 through the air purge line 118 and then either released into the atmosphere or send for use elsewhere, e.g. to turn a turbine and generate electricity which may be used to power the reactor system.

A vacuum pump (not shown) may also be used to assist in the removal of air through the first gas outlet 112 during heating of the reaction mixture.

Once the mixture in the reactor has reached the desired reaction temperature, a small volume of degassed water 102 containing a predetermined quantity of KOH catalyst (dissolved in the water and/or suspended to form a suspension) is injected into the reactor 100 through inlet 106 via valve 104. The introduction of the catalyst in this way initiates the hydrogen generation reaction between the aluminium and water within the reaction chamber of the reactor 100.

As the reaction proceeds, heat is generated due to the exothermic nature of the reaction. The heat is removed from the reactor 100 using the cooling water jacket 108 and a heat exchanger 107 may be used to deliver the heat extracted from the reaction to external systems, such as a smelting furnace, local heating scheme or agricultural/horticultural heating system.

The process control system 111 monitors parameters including reaction temperature, reaction pressure, agitator stirring speed and quantity of reaction mixture in the reactor using sensors (not shown) located within the reactor 100. In response to the measurements the process control system 111 can, automatically or manually, adjust aspects of the reaction to maintain the desired reaction conditions, for example by adjusting the amount of heat delivered by the heater 109, the amount of heat extracted by the jacket 108, the stirring speed of the agitator 110, the amount of raw materials introduced through inlets 105, 106 and 124 and the amount of reaction mixture extracted through outlets 112, 113 and 114.

The temperature of the reaction mixture is maintained in the range 75 to 85 °C by the process control unit 111 and the pressure is maintained at around 600 kPa. The reaction mixture is stirred constantly throughout the reaction by the agitator 110.

Eventually as the reaction nears completion the hydrogen evolution rate will begin to fall and this will be detected by the process control unit 111. The valve 117 will then be operated to remove some or all of the reaction mixture from the reactor 100 through the slurry outlet 114 and into the first cyclonic separation unit 121 through cyclone inlet 120. In the first cyclonic separation unit 121. The slurry removed from the reactor typically contains particulate hydroxide product, unreacted particulate aluminium, catalyst particles and process water. This mixture undergoes separation using a cyclone in the first cyclonic separation unit 121. Process water and catalyst are separated from the mixture and leave the first cyclonic separation unit 121 through outlet 123 and into recycling line 124, from which they flow back into the reactor 100. The remaining components of the mixture (remaining process water, particulate hydroxide product, and unreacted particulate aluminium) leave the first cyclonic separation unit 121 through outlet 122 and enter the electromagnetic separator 129. In the electromagnetic separator 129, particulate hydroxide product is separated from unreacted particulate aluminium. The unreacted particulate aluminium and some of the process water leaves the electromagnetic separator 129 through outlet 130 which delivers the unreacted particulate aluminium back to the reactor 100.

The particulate hydroxide product and remaining process water leaves the electromagnetic separator 129 through the outlet 131 and enters second cyclonic separation unit 132. In the second cyclonic separation unit 132, process water and further residual catalyst is removed from the mixture and leaves via outlet 133, joining recycling line 124 to be delivered back to the reactor 100. The concentrated hydroxide product slurry leaves the second cyclonic separation unit 132 through the outlet 134.

The outlet line 134 delivers the concentrated aluminium hydroxide slurry to optional downstream processing units (not shown). These may include a purification unit, for purification of the product by removal of any residual impurities. They may include a drying unit (not shown), for example a spray dryer, for the removal of residual water from the mixture. They may include a calcination unit, to calcine the hydroxide in a suitable kiln (not shown) to form alumina. They may include a packaging unit, to package the product (hydroxide or calcined oxide) for transport.

Gaseous hydrogen product leaves the reactor 100 via second gas outlet 113 and associated valve 116 and passes into hydrogen extraction line 119 and into the gas cooling and drying unit 125. The hydrogen is cooled and dried in the gas cooling and drying unit 125, before passing via gas line 126 into the hydrogen purifier unit 127 for purification. Cooling of the hydrogen gas is effected by bubbling the gas through fresh incoming feed water to provide heat to bring the water up to reaction temperature. In this way, the heat is reused by the process. After leaving the purifier unit 127 via gas line 128, the hydrogen may be compressed in a compressor unit (not shown) and used in a desired application, for example for combustion or to power a fuel cell.

In some cases some or all of the hydrogen from line 128 is combusted to provide the heat for a kiln (not shown), for example a rotary kiln or roller hearth kiln, in which aluminium hydroxide product from the line 134 is calcined to prepare alumina. Heat extracted from the reactor 100 using the heat exchanger 107 may also contribute to heating the kiln for this purpose.

Alternatively, some or all of the hydrogen from line 128 is combusted to provide the heat for a smelting furnace (not shown), in which a separate stream of waste aluminium metal (for example, divided from the stream which enters the reactor 100) is smelted or re-smelted to form pure aluminium metal. Heat extracted from the reactor 100 using the heat exchanger 107 may also contribute to heating the smelter for this purpose.

Alternatively or additionally, some or all of the hydrogen from line 128 is used as fuel for a fuel cell (not shown) and some or all of the generated electricity is used to power the reactor system, for example any components which rely on an electricity supply such as the agitator 110, the heater 109 or the control unit 111.

The reactor system containing the reactor 100 may be operated in batch mode, wherein a fixed amount of raw material is added to the reactor 100 and reaction mixture containing product hydroxide is removed from the reactor when a desired extent of reaction has been reached. The reactor can then be charged with fresh reactants to begin the cycle again.

Alternatively the reactor can be operated in continuous mode, with reactants being added to the reactor and reaction mixture being removed on a continuous basis, such that a continuous stream of hydrogen and hydroxide products is obtained.

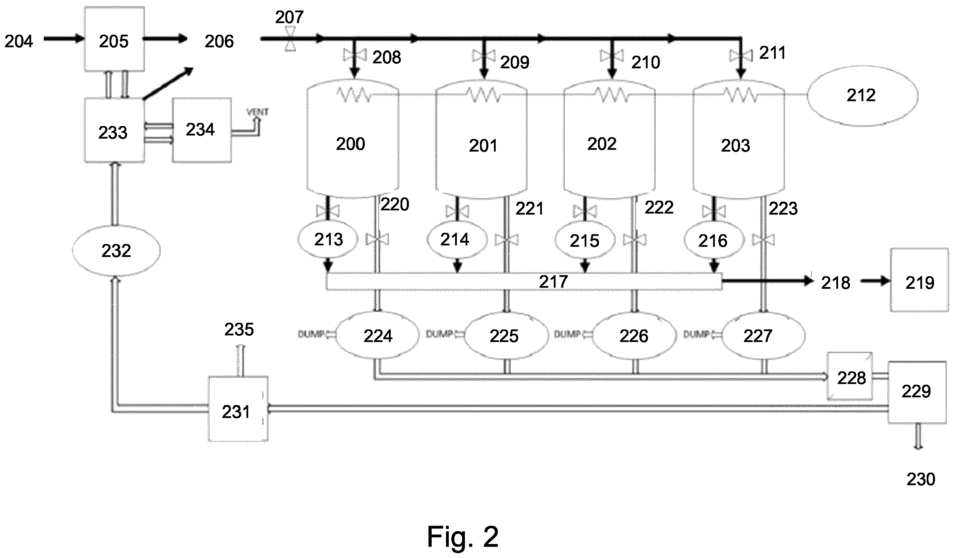

Figure 2 shows a schematic of another embodiment of a reactor system which can be used to perform the process of the invention. Many of the features correspond with those described above for the reactor system in Figure 1, with the main difference being that the Figure 2 reactor system includes four separate reactors running in parallel.

Water enters the system at 204 and is filtered and deionised at 205 before passing to optional degassing at 206. After passing through valve 207 the water enters the four reactors 200, 201, 202, 203 via valved inlets 208, 209, 210 and 211 respectively. Each of the four reactors may be substantially identical with the reactor 100 shown in Figure 1 and described above. A mixture of water and waste aluminium metal is fed into the reactors via the inlets 208, 209, 210 and 211. A KOH catalyst solution/slurry may be added via the same inlets or by separate inlets (not shown). Each reactor contains a heating element and the heating elements are independently controllable by process controller 212.

Reactors 200, 201, 202, 203 include respective valved hydroxide slurry outlets 213, 214, 215 and 216 and respective valved hydrogen gas outlets 220, 221, 222, 223. The hydroxide slurry extracted from the reactor via outlets 213, 214, 215 and 216 undergoes the same cyclonic separation and electromagnetic separation treatments described above in relation to Figure 1, for simplicity labelled 217 in Figure 2. Unreacted waste aluminium, process water and catalyst are fed back into the reactors in the same way as described above in relation to Figure 1 (not shown in Figure 2). The concentrated hydroxide slurry is then dried at drying unit 219 (e.g. spray dried).

Hydrogen gas passes from outlets 220, 221, 222, 223, through units 224, 225, 226 and 227 and to filter unit 228.

Units 224, 225, 226 and 227 each contain oxygen sensors and a dump valve. Since mixtures of H₂ and O₂ are explosive over a very broad range, the O₂ sensor allows the hydrogen to be dumped (e.g. discharged to atmosphere) if a predetermined amount of oxygen is detected within the H₂ product. A lambda pattern sensor is a suitable type of oxygen sensor for this purpose. If the H₂ is suitably oxygen-free, the H₂ is not dumped but is sent for storage.

After filtration the hydrogen passes to a gas cooling and drying unit 229 to be cooled and dried before passing to compression and storage unit 230.

Some or all of the hydrogen gas may be passed along a separate line after cooling and drying to a generator 231 where it undergoes combustion to provide power 235 to the reactor system. Water evolved from the combustion may be recovered at unit 232, passed to preheater 233 for heating, passed to degassing unit 234 for degassing via vacuum before being passed back to the preheater 233 and on to filtration and deionisation unit 205, or directly to reactor inlet line, in each case to be ultimately fed back into the reactors.

In exactly the same way as described for Figure 1, both the heat recovered from the exothermicity of the hydrogen generation reaction (via a heat exchanger located either inside or external to the reactor) and some or all of the hydrogen generated by the reaction may be used either by the reactor system itself (e.g. to pre-heat feed water 204 before feeding to the reactor) or by external systems such as local heating schemes. Figure 2 explicitly shows the use of hydrogen to power a generator to provide electricity to power the reactor system, but it may alternatively or additionally be used to provide fuel for a kiln (not shown) to calcine the aluminium hydroxide product, or a smelter (not shown) to smelt a further stream of waste metal.

The following numbered clauses relate to aspects and embodiments of the invention:
1. A process for generating hydrogen from waste metal, comprising:
   passing particulate waste metal, water and a catalyst into a reaction chamber;
   reacting the metal with water to generate hydrogen and metal hydroxide products; and
   separating the hydroxide product;
   wherein during the reaction the temperature of the reaction mixture within the reaction chamber is maintained within the range 70 to below 100 °C, and the pressure is maintained within the range 100 kPa to 200 kPa.
2. The process according to clause 1, wherein the catalyst comprises or consists of KOH.
3. The process according to clause 1 or 2, wherein the waste metal comprises one or more of aluminium, magnesium, zinc, titanium, iron, molybdenum, calcium, strontium, barium, sodium, potassium, lithium and silicon.
4. The process according to any one of the preceding clauses, wherein the waste metal comprises one or more of turnings, drill chips, shredded containers, wire, incinerator bottom ash, baghouse dust and waste foil.
5. The process according to any one of the preceding clauses, wherein the particulate waste metal has an average particle size of less than 3 mm.
6. The process according to any one of the preceding clauses, wherein the waste metal comprises contaminated metal which is unsuitable for smelting.
7. The process according to any one of the preceding clauses, wherein before feeding to the reaction chamber the particulate waste metal is subjected to one or more of washing, degreasing, shredding to reduce the particle size, and a separation process to remove one or more impurities.
8. The process according to any one of the preceding clauses, wherein the catalyst is prepared by a method which comprises a recrystallisation step to increase the purity of the catalyst to greater than 90 wt%, for example greater than 95 wt%.
9. The process according to clause 8, wherein the recrystallisation step comprises dissolving catalyst in a mixture of water and an alcohol.
10. The process according to any one of the preceding clauses, wherein the concentration of catalyst in the reactor is maintained at 0.2 moles per litre or lower throughout the reaction.
11. The process according to any one of the preceding clauses, wherein during the reaction the temperature of the reaction mixture within the reaction chamber is maintained within the range 85 to 95 °C.
12. The process according to any one of the preceding clauses, wherein before feeding to the reaction chamber, the water is subjected to one or more of deionisation, filtration, heating and degassing.
13. The process according to any one of the preceding clauses, further comprising one or more of drying and calcining the hydroxide product.
14. The process according to any one of the preceding clauses, wherein the waste metal comprises or consists of aluminium and the hydroxide product comprises or consists of Al(OH)₃.
15. The process according to clause 14, further comprising calcination of the Al(OH)₃ to prepare Al₂O₃.
16. The process according to any one of the preceding clauses, wherein some or all of the heat evolved from the hydrogen generation reaction is used for one or more of:
   (a) the drying and/or calcination of the metal hydroxide product;
   (b) horticultural heating;
   (c) delivery to a local heating scheme;
   (d) the smelting of waste metal; and
   (e) the pre-heating of water before feeding to the reaction chamber.
17. The process according to any one of the preceding clauses, wherein some or all of the hydrogen generated by the hydrogen generation reaction is used for one or more of:
   (a) the generation of electricity through hydrolysis;
   (b) combustion;
   (c) the powering of hydrogen fuel cells; and
   (d) chemical feedstock.
18. The process according to clause 17, wherein some or all of the hydrogen generated by the hydrogen generation reaction is used for the generation of electricity through hydrolysis, and some or all of the electricity is used to power a component of a reactor system comprising the reaction chamber.
19. The process according to any one of the preceding clauses, wherein the particulate waste metal added to the reaction chamber is a first waste metal stream taken from an initial stream of waste metal, wherein the first waste metal stream comprises 20 to 30 wt% of the initial stream of waste metal, and wherein the remaining portion of the initial stream of waste metal is a second waste metal stream;
   wherein the second waste metal stream is fed to a smelting furnace, and wherein the hydrogen generated from the reaction of the first waste metal stream with water in the reaction chamber is combusted, and some or all of the heat generated by the combustion is used to power the smelting furnace for smelting the second waste metal stream.
20. The process according to any one of the preceding clauses, wherein during the reaction to generate hydrogen the pH of the reaction solution is maintained at pH 12 or lower.
21. The process according to any one of the preceding clauses, wherein during the reaction to generate hydrogen, the reaction mixture is continuously agitated.
22. The process according to any one of the preceding clauses, wherein the reaction chamber comprises a heat exchanger.
23. The process according to any one of the preceding clauses, wherein gas cooling is used to cool the reaction mixture within the reaction chamber during the reaction to generate hydrogen.
24. A process for generating hydrogen from waste metal, comprising:
   passing particulate waste metal, water and a catalyst into a reaction chamber;
   reacting the metal with water to generate hydrogen and metal hydroxide products; and
   separating and purifying the hydroxide product;
   wherein some or all of the hydrogen generated by the hydrogen generation reaction is used for one or more of:
   (a) the generation of electricity through hydrolysis;
   (b) combustion;
   (c) the powering of hydrogen fuel cells; and
   (d) chemical feedstock.

### Examples

### Reactor system

Six samples of commercially traded waste aluminium of differing types were processed to determine their suitability for use to generate useful quantities of clean hydrogen gas together with aluminium hydroxide and aluminium oxide of commercially tradeable quality.

The following lab-scale reactor system was used.

A controlled temperature argon-purged reactor system was employed in order to better determine gas evolution rates; gas purity was measured using a capillary gas feed into a Hiden Hal 100 gas analysis spectrometer; and gas flow-rates and total yield/vs time using a Sierra hydrogen flowmeter and data collection system. A control comparison test was performed using 99.7% pure AI granules <1mm (APC Chemicals UK CAS7429-90-5).

Optical microscopy and loss on ignition (LOI) testing etc. was performed on the hydroxide samples produced.

The analytical reactor system included of a 1 litre borosilicate flask on a thermostatic hotplate. Water and gas temperatures were monitored using a 2 channel K-type thermocouple meter. The reactor contents were stirred throughout each experimental run. The 50 gram aluminium sample and 450 ml of de-gassed (by pre-boiling) de-ionised water were placed in the reactor vessel and the gas cooling and scrubbing section was then fitted into it.

Catalyst mix was added using a 100 mL syringe, system temperature was carefully monitored to keep it within the range 80-90 °C, to prevent the water from boiling which would flood the system with steam. The reactor contents were stirred continuously throughout the whole process.

As soon as the catalyst was added, a vigorous reaction began. Hydrogen bubbles rose to the surface and were fed to the gas cooling system. The reactor contents became milky white due to the suspended aluminium hydroxide created by the reaction between aluminium scraps and water.

The hydrogen passed through a standard Leibig condenser with pumped cold water circulation. Water vapour present in the hot gas was condensed into a flask.

A Sierra flow-meter, a highly accurate instrument especially calibrated to measure hydrogen gas, was used. Data was passed from the Sierra to a LabJack data system and stored in a dedicated programme on a portable computer.

The hydrogen gas was scrubbed clean of any residual impurities by passing through three tall cylinders. The first was filled with slightly acidified water, the second with activated carbon, and the third with zeolite drying grains to remove remaining traces of water vapour.

The final stage of the gas analysis used a gas Quad Mass spectrometer. This gas analyser is capable of detecting and measuring all significant impurities down to ppb level and has been specially programmed to detect those impurities of particular concern to fuel cell operators, including carbon monoxide and sulphur dioxide.

The following six commercial waste aluminium samples were tested as feedstock using the reactor:
- three samples from Alutrade (Samples 1-3);
- one sample of chopped wire <1 mm from a source in China (Sample 4);
- can factory waste from CrownCork (Sample 5); and
- as a control, 99.7% pure aluminium granules <0.25mm supplied by APC Ltd (Sample 6).

All except for Sample 6 were given various pre-treatments, described here for each sample.

Hydrogen gas purity was measured using a Hiden H-100 low molecular weight QMS (quadrupole mass spectrometer) as a gas analyser. This system runs under very high vacuum and gas samples from the test system were bled into the machine via a stainless steel micro-bore tube. Traces of argon were found and dismissed, since this is used in pure form as a 'carrier gas' and to purge air from the whole system.

### Example 1 - shredded used beverage cans ex. Alutrade (Sample 1)

As received, these samples were coarsely shredded with a size range between 3 mm and 30 mm. They were heavily contaminated with mud, fluff, paper, plastic, steel fragments and other unidentifiable foreign matter. This amounted to 6% by weight of the total sample. The can metal was separated from the mass by hand, washed in hot tap water with dish detergent and re-shredded to a uniform 3x2 mm then rewashed in hot water to remove mud trapped in the creases and folds now opened up.

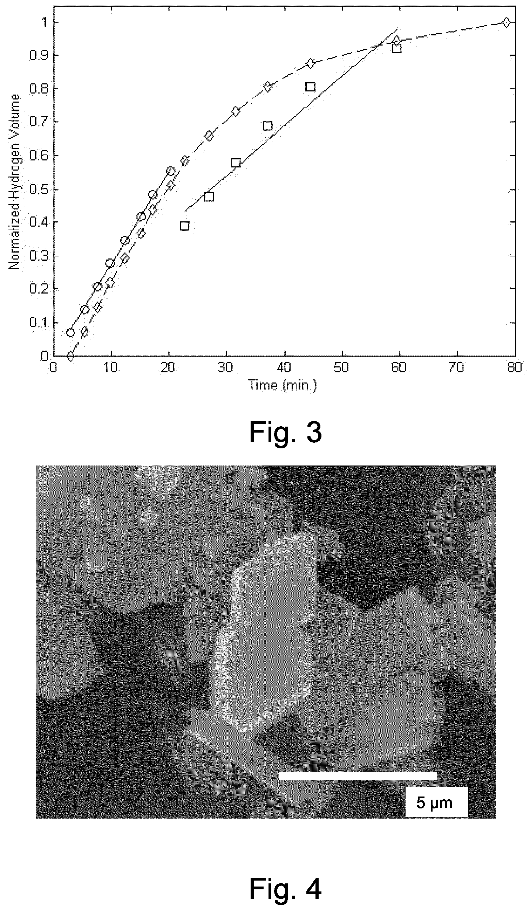

The water/hydrogen/aluminium reaction proceeded vigorously and as Figure 3 shows, reached (in most cases) 90-95% of the theoretical yield after 80 minutes at 85 °C.

This reaction kinetics curve is absolutely typical for all samples, some react faster at the start of the reaction, some more slowly but 85-95% of the theoretical yield of hydrogen is typically achieved in a small system in 60-80 minutes, but may take as long as 3-4 hours in large or very large systems. Colour of the residual precipitated material was mid-grey, probably due to contamination with can coatings. Washing the insoluble material in two changes of de-ionised water followed by calcination of part of the sample at 750 °C for just 25 minutes changed this to a pale biscuit-white. Another fraction of the hydroxide sample was retained for LOI testing.

### Example 2 - 'Thermo Swarf' ex Alutrade (Sample 2)

This sample had a range of particle sizes, a maximum of 8x2 mm down to 0.25 mm. The sample smelled of oil/cutting fluid and contained some foreign matter, including dark-coloured plastic chips (probably PVC) >2 mm in size which were removed by flotation when washing and also a few fragments of steel which were removed by a magnet. The reaction produced a creamy-white precipitate with some small specks of unreacted metal and one slightly larger piece which was presumable non-magnetic stainless steel. Hydrogen production was normal, and calcining part of the sample produced a near-white sample of aluminium oxide.

### Example 3 - 2000-7000 Swarf, ex Alutrade (Sample 3)

This sample was of similar appearance and size-distribution to Sample 2 but appeared to contain more drill-chippings and fewer turnings. It was also oily and contained quite a few scraps of magnetisable metal and some plastic fragments. These contaminants amounted to less than 1% of the sample weight and were removed by washing and several passes through a magnetic funnel. Once again a pale biscuit precipitate was produced with a typical rate of hydrogen production. A few specks of unreacted metal were found in the precipitate, around 0.2 mm in size, possibly something like anodised aluminium bronze alloy. These disappeared upon calcining, presumably converted to aluminium oxide. LOI tests were carried out on a proportion of the precipitate.

### Example 4 - aluminium shot blasting granules from chopped wire, ex. China market (Sample 4)

This sample was composed of uniform particles <1 mm in size. It was washed once in de-ionised water and dish soap and rinsed before testing. Hydrogen production was slower than the other samples to start with, possibly due to some residual coating of unknown type but soon achieved a similar rate to the rest. The hydroxide precipitate was nearly white in colour and contained no visible metal.

### Example 5 - Uncoated/coated can punchings ex. CrownCork/Ball, S Ireland Plant (Sample 5)

This sample was of small can punchings/trimmings direct from a beverage packing plant. Some were coated with lacquer, some not, though the plant does have the capability to separate these streams at source. They were washed once before use and produced a good flow of hydrogen but a yield only 87% of the theoretical maximum. Upon examination of the precipitate it was discovered that this was due to a small percentage of coated particles that did not react. The hydroxide precipitate was very pale grey but became almost white upon calcining.

### Example 6 - 99.7% pure research-grade aluminium (Sample 6)

The rationale for testing this pure small-particle material was that it would act as a 'control' for the other Examples since it is free from coatings of any kind, plastics, paper, or indeed anything but aluminium.

As expected, it reacted very vigorously as soon as the catalyst was injected, giving a yield close to the theoretical maximum in only 65 minutes, which is higher than the more typical yield curve for scrap material shown in Figure 3.

The precipitate was milk-white and contained no unreacted metal particles when examined using a microscope. When calcined this yielded pure white aluminium oxide. A further precipitate sample was dried at 180 °C and used for LOI testing.

Results and observations from the tests are set out in Table 1.

| | | | **Impurities detected in H₂ product (ppm)** | | | | | | |
|---|---|---|---|---|---|---|---|---|---|
| **Example** | **Yield (% of theoretical)** | **Run time (mins)** | **Water vapour** | **N₂** | **O₂** | **CO** | **CO₂** | **SO₂** | **Organics** |
| 1 | 92 | 80 | 30 | 12 | 4 | 0 | 1 | 0 | 2 |
| 2 | 95 | 80 | 40 | 8 | 3 | 0 | 0 | 0 | 4 |
| 3 | 90 | 80 | 52 | 18 | 4 | 0 | <1 | 0 | <1 |
| 4 | 95 | 80 | 22 | 9 | <2 | 0 | <1 | 0 | 0 |
| 5 | 87 | 80 | 34 | 22 | 5 | 0 | 2 | 0 | 0 |
| 6 | 97 | 80* | 44 | 18 | <4 | 0 | 1 | 0 | 0 |

| | | | | | | | | | |
|---|---|---|---|---|---|---|---|---|---|
| *observation showed that reaction had finished after 65 mins. | | | | | | | | | |

It should be noted that the presence of traces of air (oxygen, nitrogen, carbon dioxide) and water vapour are almost impossible to remove from any small low-temperature wet system that is frequently opened for loading and unloading, such as the one used for the above tests. Larger systems will give improved results. The results show that the process of the invention produces very pure hydrogen very suitable for use in fuel cells from a varied range of input metal samples.

The process produces very uniform 3-5 µm sharp and square-edged particles of aluminium tri-hydroxide as an initial product. A typical SEM image obtained for the aluminium tri-hydroxide product is shown in Figure 4. This type of hydroxide has very desirable properties as a high value catalyst support material.

### Example 7 - LOI testing

Loss On Ignition (LOI) testing is a standard method of determining the hydration state of aluminium (tri)hydroxide Al(OH)₃ which is the principal end product of the method. LOI is carried out using the ASTM D7348 method, in which a weighed sample is first dried at 110 °C, then reweighed, finally calcined at 1000 °C and weighed again. This enables the weight percentage water lost from a 'dry sample' to be determined after exposure to the higher temperature. The LOI results give an indication of the purity of the hydroxide. A slightly modified version of the ASTM D7348 test was used in which calcining was carried out at 750 °C since a 1000 °C capable kiln was not available at the time. However, 700 °C+ is normally considered to be adequate for preliminary test purposes. 50 g samples were used for LOI testing.

Samples 2 and 5 were screened with a 100 mesh filter before testing to remove unreacted metal fragments.

Table 2 shows the results of LOI testing. The error margin for the purity values is ±0.3%. The purity values provided for Samples 1 and 5 are less reliable because residual can coating residue on the samples was lost during the calcination.

**Table 2**

| Example | Weight loss (%) | Purity (%) |
|---|---|---|
| 1 | 36.1 | 94.2 |
| 2 | 35.0 | 99.3 |
| 3 | 34.5 | 99.7 |
| 4 | 34.4 | 99.6 |
| 5 | 35.9 | 97.4 |
| 6 | 34.5 | 99.7 |

Photographs were taken of each sample and the samples were analysed using SEM, laser diffraction (PSD), XRD and TG-DTA.

Figure 4 is a typical SEM image of aluminium hydroxide product made by the process of the invention. The particles are highly uniform, 3-5 µm in diameter with sharp and square edges. This type of hydroxide has desirable properties for use as a catalyst support material, for example.

## Claims

1. A process for generating hydrogen from waste metal, comprising:
passing particulate waste metal, water and a catalyst into a reaction chamber;
reacting the metal with water to generate hydrogen and metal hydroxide products; and
separating the hydroxide product;
wherein during the reaction the temperature of the reaction mixture within the reaction chamber is maintained within the range 70 to below 100 °C, and the pressure is maintained within the range 100 kPa to 200 kPa.

2. The process according to claim 1, wherein the catalyst comprises or consists of KOH.

3. The process according to claim 1 or 2, wherein the waste metal comprises one or more of aluminium, magnesium, zinc, titanium, iron, molybdenum, calcium, strontium, barium, sodium, potassium, lithium and silicon.

4. The process according to any one of the preceding claims, wherein the particulate waste metal has an average particle size of less than 3 mm.

5. The process according to any one of the preceding claims, wherein the catalyst is prepared by a method which comprises a recrystallisation step to increase the purity of the catalyst to greater than 90 wt%, for example greater than 95 wt%, optionally wherein the recrystallisation step comprises dissolving catalyst in a mixture of water and an alcohol.

6. The process according to any one of the preceding claims, wherein the concentration of catalyst in the reactor is maintained at 0.2 moles per litre or lower throughout the reaction.

7. The process according to any one of the preceding claims, wherein during the reaction the temperature of the reaction mixture within the reaction chamber is maintained within the range 85 to 95 °C.

8. The process according to any one of the preceding claims, further comprising one or more of drying and calcining the hydroxide product.

9. The process according to any one of the preceding claims, wherein the waste metal comprises or consists of aluminium and the hydroxide product comprises or consists of Al(OH)₃, optionally further comprising calcination of the Al(OH)₃ to prepare Al₂O₃.

10. The process according to any one of the preceding claims, wherein some or all of the heat evolved from the hydrogen generation reaction is used for one or more of:
(a) the drying and/or calcination of the metal hydroxide product;
(b) horticultural heating;
(c) delivery to a local heating scheme;
(d) the smelting of waste metal; and
(e) the pre-heating of water before feeding to the reaction chamber.

11. The process according to any one of the preceding claims, wherein some or all of the hydrogen generated by the hydrogen generation reaction is used for one or more of:
(a) the generation of electricity through hydrolysis;
(b) combustion;
(c) the powering of hydrogen fuel cells; and
(d) chemical feedstock.

12. The process according to any one of the preceding claims, wherein the particulate waste metal added to the reaction chamber is a first waste metal stream taken from an initial stream of waste metal, wherein the first waste metal stream comprises 20 to 30 wt% of the initial stream of waste metal, and wherein the remaining portion of the initial stream of waste metal is a second waste metal stream;
wherein the second waste metal stream is fed to a smelting furnace, and wherein the hydrogen generated from the reaction of the first waste metal stream with water in the reaction chamber is combusted, and some or all of the heat generated by the combustion is used to power the smelting furnace for smelting the second waste metal stream.

13. The process according to any one of the preceding claims, wherein during the reaction to generate hydrogen, the reaction mixture is continuously agitated.

14. The process according to any one of the preceding claims, wherein the reaction chamber comprises a heat exchanger, and/or wherein gas cooling is used to cool the reaction mixture within the reaction chamber during the reaction to generate hydrogen.

15. A process for generating hydrogen from waste metal, comprising:
passing particulate waste metal, water and a catalyst into a reaction chamber;
reacting the metal with water to generate hydrogen and metal hydroxide products; and
separating and purifying the hydroxide product;
wherein some or all of the hydrogen generated by the hydrogen generation reaction is used for one or more of:
(a) the generation of electricity through hydrolysis;
(b) combustion;
(c) the powering of hydrogen fuel cells; and
(d) chemical feedstock.
